(19) Europäisches Patentamt
European Patent Office
Office européen des brevets

(11) EP 4 783 377 A1

(12) EUROPÄISCHE PATENTANMELDUNG

(43) Veröffentlichungstag:
29.07.2026 Patentblatt 2026/31

(21) Anmeldenummer: 26152555.4

(22) Anmeldetag: 19.01.2026

(51) Internationale Patentklassifikation (IPC):
H01S 3/00 (2006.01)     G02F 1/35 (2006.01)

(52) Gemeinsame Patentklassifikation (CPC):
H01S 3/0057; G02F 1/3511; G02F 1/353;
H01S 3/0092

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 22.01.2025 DE 102025102259

(71) Anmelder: TRUMPF Laser SE
78713 Schramberg (DE)

(72) Erfinder:
• Mans, Torsten
52070 Aachen (DE)
• Flamm, Daniel
71640 Ludwigsburg (DE)
• Kahmann, Max
71254 Nufringen (DE)

(74) Vertreter: Trumpf Patentabteilung
TRUMPF SE + Co. KG
Johann-Maus-Straße 2
71254 Ditzingen (DE)

(54) **LASERANORDNUNG UND VERFAHREN ZUR ZEITLICHEN KOMPRESSION EINES GEPULSTEN LASERSTRAHLS MITTELS SELBSTPHASENMODULATION**

(57) Die Erfindung betrifft eine Laseranordnung zur zeitlichen Kompression eines gepulsten Laserstrahls (12) mittels Selbstphasenmodulation mit Merkmalen des Anspruchs 1 und ein Verfahren zur zeitlichen Kompression eines gepulsten Laserstrahls (12) mittels Selbstphasenmodulation mit Merkmalen des nebengeordneten Anspruchs.

Fig.1

EP 4 783 377 A1

**Beschreibung**

Die Erfindung betrifft eine Laseranordnung zur zeitlichen Kompression eines gepulsten Laserstrahls mittels Selbstphasenmodulation mit Merkmalen des Anspruchs 1 und ein Verfahren zur zeitlichen Kompression eines gepulsten Laserstrahls mittels Selbstphasenmodulation mit Merkmalen des nebengeordneten Anspruchs.

Die zeitliche Kompression, d.h. Verkürzung, von ultrakurzen Laserpulsen mit Hilfe des physikalischen Effektes der Selbstphasenmodulation ist seit vielen Jahren Gegenstand wissenschaftlicher Untersuchungen. Dabei erzeugt der sogenannte Kerr-Effekt aufgrund der zeitlich variierenden Größe der elektrischen Felder eines Laserpulses neue optische Frequenzen, die wiederum durch zeitliche Umordnung (z.B. durch gechirpte Spiegel, Gitter- oder Prismen-Aufbauten) zur Erzeugung eines kurzen Pulses in der Zeitdomäne genutzt werden.

Üblicherweise wird dieser Effekt mit dem sogenannten B-Integral quantifiziert.

$$B \sim n2 * I * L$$

wobei n2 ein nichtlinearer Brechungsindex im Medium, I Intensität des Laserstrahls und L eine Propagationslänge im Medium ist.

Dabei ist es wichtig der Verschlechterung der Strahlqualität des üblicherweise Gaußschen Strahlprofils des ursprünglichen eingestrahlten Laserstrahls entgegenzuwirken. Ursache der Verschlechterung sind im Wesentlichen zwei Effekte: Optische Aberrationen des räumlichen Kerr-Effekts, d.h. der "Kerr-Linse", und die Tatsache, dass mehr neuen Frequenzanteile in der Mitte, d.h. auf dem Maximum, und kaum an den (auslaufenden) Rändern des Gaußschen Strahls entstehen, d.h. dass dem Strahl ein räumlicher spektraler Verlauf aufgeprägt wird. Abhängig von der absoluten Größe dieser Effekte, kann die Laserstrahlung nach einer solcher Anordnung zur nichtlinearen, zeitlichen Kompression technisch nicht mehr nutzbar sein. Zur Unterdrückung dieser Effekte werden daher eine Führung in Grundmode-Fasern, sowie Umsortierung durch eine geeignet gewählte Propagation des Gaußschen Strahls (bspw. in Herriott-Zellen) genutzt.

Diese Methoden haben jedoch Limitationen oder technische Nachteile. So können Fasern nur begrenzte Pulsspitzenleistungen oder Pulsenergie unterstützen und/oder sie erfordern eine präzise Einkopplung in die geführten Grundmode. Ferner kann eine leichte Dejustage des Laserstrahlengangs leicht zu einer Zerstörung der Faserfacette führen. Multipass-Anordnungen sind deutlich unempfindlicher gegen Abweichungen des Laser-Poyntings als Fasern, erfordern allerdings eine genaue Modenanpassung des eingekoppelten Laserstrahls und eine sorgfältige Justage der Spiegel, um z.B. das Herriott-Kriterium zu erfüllen.

Es ist daher Aufgabe der vorliegenden Erfindung eine Laseranordnung und ein Verfahren zur zeitlichen Kompression eines gepulsten Laserstrahls mittels Selbstphasenmodulation bereitzustellen, wobei die obigen Nachteile ausgeräumt werden.

Die obige Aufgabe wird durch eine Laseranordnung zur zeitlichen Kompression (Verkürzung) eines gepulsten Laserstrahls mittels Selbstphasenmodulation mit den Merkmalen des Anspruchs 1 gelöst.

Die Laseranordnung umfasst eine Laserquelle. Die Laserquelle ist zur Erzeugung des Laserstrahls eingerichtet. Die Laserquelle kann einen Festkörper-Laser umfassen oder als ein Festkörper-Laser ausgebildet sein. Die Laserquelle kann eingerichtet sein, um einen Laserstrahl mit einer mittleren Pulsleistung in einem Bereich von 1 Gigawatt bis 1 Terawatt zu erzeugen. Die Laserquelle kann eingerichtet sein, um einen Laserstrahl mit einer Pulsenergie in einem Bereich von 1 Millijoule bis 1 Joule zu erzeugen. Die Laserquelle kann eingerichtet sein, um einen Laserstrahl mit einer Pulswiederholrate (Repetitionsrate) in einem Bereich von 100 Hertz bis 1 Megahertz zu erzeugen. Die Laserquelle kann eingerichtet sein, um einen Laserstrahl mit einer Wellenlänge im Infrarotbereich (bspw. 1 $\mu$m (Mikrometer) bis 10 $\mu$m), im sichtbaren Bereich (bspw. 800nm (Nanometer), 515 nm) und/oder im Ultraviolettbereich (bspw. 343 nm) zu erzeugen.

Die Vorrichtung umfasst ein erstes Element, ein zweites Element und ein drittes Element. Das erste Element ist als ein fokussierendes optisches Element ausgebildet. Das zweite Element ist als ein defokussierendes optisches Element ausgebildet. Das dritte Element ist als ein fokussierendes optisches Element ausgebildet. Das zweite Element ist in eine Propagationsrichtung des Laserstrahls nach dem ersten Element angeordnet. Das dritte Element ist in die Propagationsrichtung des Laserstrahls nach dem zweiten Element angeordnet. Das erste, das zweite und das dritte Element sind derart eingerichtet, insbesondere zueinander beabstandet, dass ein B-integral des Laserstrahls von mindestens 1 Rad, insbesondere in einem Bereich von 1,5 Rad bis 5 Rad, erzeugt wird.

Hierdurch kann die nichtlineare Pulskompression mit einfachen Mitteln umgesetzt werden. Es können Standardkomponenten im Einfachdurchgang des Laserstrahls verwendet werden. Insbesondere kann eine Verschlechterung der Strahlqualität vermieden oder zumindest reduziert werden. So können insbesondere durch eine geeignete Anordnung des ersten, des zweiten und des dritten Elements Aberrationen einer Phasenfront durch die ausgeprägte Kerr-Linse (d. h. der erste der beiden weiter oben erwähnten Effekte) entlang der Strahlpropagation minimiert werden. Des Weiteren kann eine einfache Justage umgesetzt werden.

Gemäß einer Weiterbildung der Laseranordnung kann die Laseranordnung ein viertes Element umfassen. Das vierte Element kann als ein defokussierendes optisches Element ausgebildet sein. Das vierte Element kann in die Propagationsrichtung des Laserstrahls vor dem dritten Element (und/oder nach dem zweiten Element) angeordnet sein.

Hierdurch kann die Laseranordnung weiter optimiert werden.

Gemäß einer Weiterbildung der Laseranordnung können das erste, das zweite, das dritte und/oder das vierte Element jeweils als ein Spiegel ausgebildet sein. Das erste, das zweite, das dritte und/oder das vierte Element können jeweils als eine Linse ausgebildet sein.

Hierdurch kann die Laseranordnung flexibel und/oder mit Standardkomponenten umgesetzt werden.

Gemäß einer Weiterbildung der Laseranordnung kann die Laseranordnung derart eingerichtet sein, dass ein Abstand zwischen dem ersten, dem zweiten, dem dritten und/oder dem vierten Element einstellbar ist. Mit anderen Worten, die Position des ersten, des zweiten, des dritten und/oder des vierten Elements kann insbesondere entlang der Propagationsrichtung des Laserstrahls variiert werden.

Hierdurch kann mit einfachen Mitteln ein möglichst optimales Akkumulieren des B-Integrals durch den Laserstrahl erreicht werden.

Gemäß einer Weiterbildung der Laseranordnung können das erste, das zweite, das dritte und/oder das vierte Element als ein Zoom-Teleskop ausgebildet sein.

Hierdurch kann die Anordnung des ersten, des zweiten, des dritten und/oder des vierten Elements mit einfachen Mitteln umgesetzt werden.

Gemäß einer Weiterbildung der Laseranordnung können das erste, das zweite, das dritte und/oder das vierte Element ein Kerrmedium umfassen. Das erste, das zweite, das dritte und/oder das vierte Element können aus einem Kerrmedium ausgebildet sein.

Hierdurch kann mit einfachen Mitteln eine Selbstphasenmodulation des Laserstrahls umgesetzt werden. Auf zusätzliche Kerrmedien bzw. Elemente kann verzichtet werden.

Vorliegend ist mit einem Kerrmedium ein Medium gemeint, dessen Brechungsindex in Abhängigkeit von der Intensität des einfallenden Laserstrahls variiert (Kerr-Effekt). Das Kerrmedium kann nichtlineare optische Eigenschaften aufweisen. Das Kerrmedium kann fest, flüssig und/oder gasförmig ausgebildet sein.

Gemäß einer Weiterbildung der Laseranordnung können das erste, das zweite, das dritte und/oder das vierte Element aus einem optischen Glas ausgebildet sein. Das erste, das zweite, das dritte und/oder das vierte Element können aus Quarzglas (Fused Silica), BK7-Glas und/oder SF12-Glas ausgebildet sein.

Hierdurch können das erste, das zweite, das dritte und/oder das vierte Element mit einfachen Mitteln umgesetzt werden.

Gemäß einer Weiterbildung der Laseranordnung kann die Laseranordnung ein fünftes Element umfassen. Das fünfte Element kann als ein Kerrmedium ausgebildet sein. Das fünfte Element kann die Propagationsrichtung des Laserstrahls nach dem zweiten Element angeordnet sein. Das fünfte Element kann in die Propagationsrichtung des Laserstrahls vor dem dritten Element und/oder vor dem vierten Element angeordnet sein. Das fünfte Element kann im Strahlengang des Zoom-Teleskops angeordnet sein. Das fünfte Element kann aus einem optischen Glas, insbesondere Quarzglas (Fused Silica), BK7-Glas und/oder SF12-Glas, ausgebildet sein. Das fünfte Element kann fest, flüssig und/oder gasförmig ausgebildet sein.

Hierdurch kann die Selbstphasenmodulation des Laserstrahls weiter optimiert werden.

Das erste Element, das zweite Element, das dritte Element, das vierte Element, das fünfte Element und/oder das Zoom-Teleskop können entlang einer Laserstrahlachse (entlang der Propagationsrichtung des Laserstrahls), insbesondere linear, angeordnet sein. Der Laserstrahl kann durch das erste Element, das zweite Element, das dritte Element, das vierte Element, das fünfte Element und/oder das Zoom-Teleskop hindurch geleitet (transmittiert) werden.

Gemäß einer Weiterbildung der Laseranordnung kann das fünfte Element als eine planparallele Platte oder als eine Linse ausgebildet sein.

Hierdurch kann das fünfte Element mit einfachen Mitteln umgesetzt werden.

Gemäß einer Weiterbildung der Laseranordnung kann die Laseranordnung eine Vorrichtung zur zeitlichen Kompression des Laserstrahls umfassen. Die Vorrichtung kann in Propagationsrichtung des Laserstrahls nach dem dritten Element angeordnet sein. Die Vorrichtung kann in Propagationsrichtung des Laserstrahls nach dem Zoom-Teleskop angeordnet sein.

Hierdurch kann die zeitliche Kompression des Laserstrahls mit einfachen Mitteln umgesetzt werden.

Gemäß einer Weiterbildung der Laseranordnung kann die Vorrichtung mindestens einen, insbesondere gechirpten, Spiegel, ein Prisma und/oder ein Gitter umfassen.

Hierdurch kann die Vorrichtung möglichst flexibel umgesetzt werden.

Gemäß einer Weiterbildung der Laseranordnung kann die Vorrichtung als eine dispersive Spiegelanordnung ausgebildet sein.

Hierdurch kann die Vorrichtung mit einfachen Mitteln umgesetzt werden.

Gemäß einer Weiterbildung der Laseranordnung kann die Vorrichtung eine Vakuumkammer umfassen.

Hierdurch kann die Laseranordnung weiter optimiert werden.

Gemäß einer Weiterbildung der Laseranordnung können das erste Element und/oder das zweite Element außerhalb der Vakuumkammer angeordnet sein. Das dritte Element, das vierte Element und/oder die Vorrichtung können in der Vakuumkammer angeordnet sein.

Hierdurch können das erste Element und/oder das zweite Element frei zugänglich umgesetzt werden, sodass eine Justage des Laserstrahls außerhalb der Vakuumkammer und damit vereinfacht umgesetzt werden kann.

Gemäß einer Weiterbildung der Laseranordnung kann die Vakuumkammer ein Fenster umfassen. Das fünfte Element kann als das Fenster der Vakuumkammer ausgebildet sein. Mit anderen Worten, der Laserstrahl kann durch das fünfte Element in die Vakuumkammer eingeleitet (transmittiert) werden.

Hierdurch kann der Laserstrahl mit einfachen Mitteln in die Vakuumkammer eingeleitet werden, wobei das Fenster der Vakuumkammer als Kerrmedium benutzt werden kann.

Das erste Element, das zweite Element, das dritte Element, das vierte Element, das fünfte Element und/oder das Zoom-Teleskop können zur Einstellung eines gewünschten Ausgangsstrahldurchmessers verwendet werden.

Die obige Aufgabe wird durch ein Verfahren zur zeitlichen Kompression eines gepulsten Laserstrahls mittels Selbstphasenmodulation mit den Merkmalen des nebengeordneten Anspruchs gelöst. Das Verfahren umfasst die Schritte:
Bereitstellen einer Laseranordnung gemäß obiger Ausführungen.

Einstellen eines Abstandes zwischen dem ersten, dem zweiten und/oder dem dritten Element derart, dass ein B-Integral des Laserstrahls von mindestens 1 Rad, insbesondere in einem Bereich von 1,5 Rad bis 5 Rad, erzeugt wird.

Zeitliche Kompression des Laserstrahls.

Hinsichtlich der mit dem Verfahren erzielbaren Vorteile wird auf die diesbezüglichen Ausführungen zur Laseranordnung verwiesen. Zur weiteren Ausgestaltung des Verfahrens können die im Zusammenhang mit der Laseranordnung beschriebenen und/oder die nachfolgend noch erläuterten Maßnahmen dienen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Es zeigt:

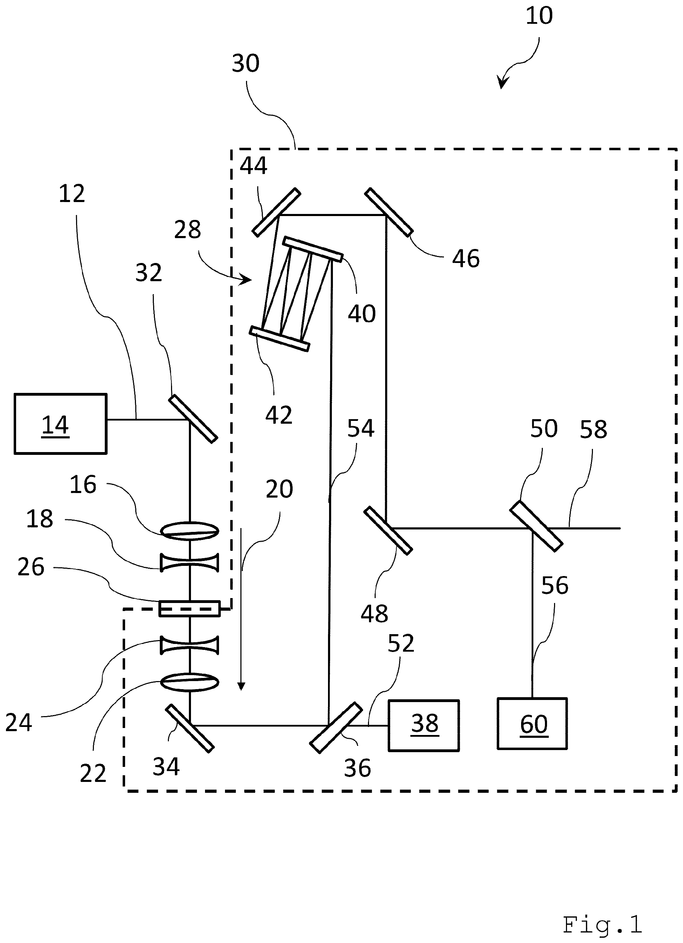

Fig. 1   eine schematische Darstellung einer Laseranordnung zur zeitlichen Kompression eines gepulsten Laserstrahls mittels Selbstphasenmodulation.

Die Laseranordnung trägt in Figur 1 insgesamt das Bezugszeichen 10. Die Laseranordnung 10 ist zur zeitlichen Kompression eines gepulsten Laserstrahls 12 mittels Selbstphasenmodulation eingerichtet.

Die Laseranordnung 10 umfasst eine Laserquelle 14. Die Laserquelle 14 ist zur Erzeugung des Laserstrahls 12 eingerichtet.

Die Laseranordnung 10 umfasst ein erstes Element 16, ein zweites Element 18 und ein drittes Element 22. Das erste Element 16 ist als ein fokussierendes optisches Element ausgebildet. Das zweite Element 18 ist als ein defokussierendes optisches Element ausgebildet. Das dritte Element 22 ist als ein fokussierendes optisches Element ausgebildet. Das zweite Element 18 ist in eine Propagationsrichtung 20 des Laserstrahls 12 nach dem ersten Element 16 angeordnet. Das dritte Element 22 ist in die Propagationsrichtung 20 des Laserstrahls 12 nach dem zweiten Element 18 angeordnet. Das erste, das zweite und das dritte Element 16, 18, 22 sind derart eingerichtet, insbesondere zueinander beabstandet, dass ein B-Integral des Laserstrahls 12 von mindestens 1 Rad, insbesondere in einem Bereich von 1,5 Rad bis 5 Rad, erzeugt wird. Die Propagationsrichtung 20 des Laserstrahls 12 ist in Figur 1 mittels eines Pfeils angedeutet.

Die Laseranordnung 10 kann ein viertes Element 24 umfassen. Das vierte Element 24 kann als ein defokussierendes optisches Element ausgebildet sein. Das vierte Element 24 kann in die Propagationsrichtung 20 des Laserstrahls 12 vor dem dritten Element 22 angeordnet sein.

Die Laseranordnung 10 kann derart eingerichtet sein, dass ein Abstand zwischen dem ersten, dem zweiten, dem dritten und/oder dem vierten Element 16, 18, 22, 24 einstellbar ist. Das erste, das zweite, das dritte und/oder das vierte Element 16, 18, 22, 24 können jeweils als ein Spiegel oder als eine Linse ausgebildet sein. Das erste, das zweite, das dritte und/oder das vierte Element 16, 18, 22, 24 können als ein Zoom-Teleskop ausgebildet sein.

Das erste, das zweite, das dritte und/oder das vierte Element 16, 18, 22, 24 können ein Kerrmedium umfassen oder daraus ausgebildet sein. Das erste, das zweite, das dritte und/oder das vierte Element 16, 18, 22, 24 können aus einem optischen Glas, insbesondere Quarzglas, BK7-Glas und/oder SF12-Glas, ausgebildet sein.

Die Laseranordnung 10 kann ein fünftes Element 26 umfassen. Das fünfte Element 26 kann als ein Kerrmedium ausgebildet sein. Das fünfte Element 26 kann in die Propagationsrichtung 20 des Laserstrahls 12 nach dem zweiten Element 18 angeordnet sein. Das fünfte Element 26 kann als eine planparallele Platte oder als eine Linse ausgebildet sein. Das fünfte Element 26 kann als ein Festkörper ausgebildet sein. Es ist ebenso denkbar, dass das fünfte Element 26 als ein Gas und/oder als eine Flüssigkeit ausgebildet sein kann.

Die Laseranordnung 10 kann eine Vorrichtung 28 zur zeitlichen Kompression des Laserstrahls 12 umfassen. Die Vorrichtung 28 kann in Propagationsrichtung 20 des Laserstrahls 12 nach dem dritten Element 22 angeordnet sein. Die Vorrichtung 28 kann mindestens einen, insbesondere gechirpten, Spiegel, ein Prisma und/oder ein Gitter umfassen. Die Vorrichtung 28 kann als eine dispersive Spiegelanordnung ausgebildet sein.

Die Laseranordnung 10 kann eine Vakuumkammer 30 umfassen. Das erste Element 16 und/oder das zweite Element 18 können außerhalb der Vakuumkammer 30 angeordnet sein. Das dritte Element 22 und/oder das vierte Element 24 können innerhalb der Vakuumkammer 30 angeordnet sein. Die Vakuumkammer 30 kann ein Fenster umfassen. Das fünfte Element 26 kann als das Fenster der Vakuumkammer 30 ausgebildet sein.

In Figur 1 wird der mittels der Laserquelle 14 erzeugte Laserstrahls 12 mittels eines ersten Spiegels 32 durch das erste Element 16, das zweite Element 18, das fünfte Element 26, das vierte Element 24 und das dritte Element 22 (in der genannten Reihenfolge) geleitet bzw. transmittiert. Vorliegend bilden das erste Element 16, das zweite Element 18, das vierte Element 24 und das dritte Element 22 ein Zoom-Teleskop, wobei das fünfte Element 26 (als Kerrmedium) innerhalb des Zoom-Teleskops, zwischen dem zweiten Element 18 und dem vierten Element 24 angeordnet ist.

Der Laserstrahl 12 wird anschließend vorliegend mittels eines zweiten Spiegels 34 umgelenkt. Es ist ein erster Strahlteiler 36 vorgesehen, der den Laserstrahl 12 in einen ersten Teilstrahl 52 und einen zweiten Teilstrahl 54 teilt. Der erste Teilstrahl 52 wird vorliegend auf einen Leistungsmesser 38 (power meter) geleitet. Der Leistungsmesser 38 dient vorliegend der Überwachung der Leistung des Laserstrahls 12. Der zweite Teilstrahl 54 wird in die Vorrichtung 28 eingeleitet. Die Vorrichtung 28 ist vorliegend als eine dispersive Spiegelanordnung mit einem dritten Spiegel 40 und einem vierten Spiegel 42 ausgebildet. Der zweite Teilstrahl 54 wird mehrfach zwischen dem dritten Spiegel 40 und dem vierten Spiegel 42 hin und her reflektiert, bis er aus der Vorrichtung 28 ausgekoppelt wird. Dabei erfährt der zweite Teilstrahl 54 eine zeitliche Kompression.

Der zweite Teilstrahl 54, der nach dem Auskoppeln aus der Vorrichtung 28 zeitlich komprimiert ist, wird anschließend vorliegend mittels eines fünften Spiegels 44, eines sechsten Spiegels 46 und eines siebten Spiegels 48 auf einen zweiten Strahlteiler 50 geleitet. Der zweite Strahlteiler 50 teilt den zweiten Teilstrahl 54 in einen dritten Teilstrahl 56 und einen vierten Teilstrahl 58. Der dritte Teilstrahl 56 wird vorliegend auf einen optischen Sensor 60, insbesondere eine Kamera, geleitet. Der optische Sensor 60 dient der Überwachung bzw. dem Monitoring der Strahlqualität, insbesondere des $M^2$-Faktors. Der vierte Teilstrahl 58 stellt einen zeitlich komprimierten, gepulsten Laserstrahl dar, der bspw. in einer Anwendung weiterverwendet werden kann.

Vorliegend sind sämtliche oben beschriebenen Elemente mit Ausnahme der Laserquelle 14, des ersten Spiegels 32, des ersten Element 16 und des zweiten Elements 18 innerhalb der Vakuumkammer 30 angeordnet. Das fünfte Element 26 bildet vorliegend das Fenster der Vakuumkammer 30. Das fünfte Element 26 ist somit vorliegend teilweise innerhalb (zumindest mit seiner der Vakuumkammer 30 zugewandten Seite) und teilweise außerhalb (zumindest mit seiner der Vakuumkammer 30 abgewandten Seite) der Vakuumkammer 30 angeordnet.

Im Folgenden wird anhand der Figur 1 ein Verfahren zur zeitlichen Kompression eines gepulsten Laserstrahls 12 mittels Selbstphasenmodulation beschrieben. Das Verfahren umfasst die Schritte: Bereitstellen einer Laseranordnung 10 gemäß obiger Ausführungen. Bei der Laseranordnung 10 kann es sich um die in Figur 1 gezeigte Laseranordnung 10 handeln.

Einstellen eines Abstandes zwischen dem ersten, dem zweiten und/oder dem dritten Element 16, 18, 22 derart, dass ein B-Integral des Laserstrahls 12 von mindestens 1 Rad, insbesondere in einem Bereich von 1,5 Rad bis 5 Rad, erzeugt wird. Vorliegend kann ein Abstand zwischen dem ersten, dem zweiten, dem dritten, dem vierten und/oder dem fünften Element 16, 18, 22, 24, 26 eingestellt werden.

Zeitliche Kompression des Laserstrahls 12.

**Patentansprüche**

1. Laseranordnung (10) zur zeitlichen Kompression eines gepulsten Laserstrahls (12) mittels Selbstphasenmodulation umfassend:

   - eine Laserquelle (14) zur Erzeugung des Laserstrahls (12),
   - ein erstes Element (16), wobei das erste Element (16) als ein fokussierendes optisches Element ausgebildet ist,
   - ein zweites Element (18), wobei das zweite Element (18) als ein defokussierendes optisches Element ausgebildet ist, wobei das zweite Element (18) in eine Propagationsrichtung (20) des Laserstrahls (12) nach dem ersten Element (16) angeordnet ist,
   - ein drittes Element (22), wobei das dritte Element (22) als ein fokussierendes optisches Element ausgebildet ist, wobei das dritte Element (22) in die Propagationsrichtung (20) des Laserstrahls (12) nach dem zweiten Element (18) angeordnet ist,

   wobei das erste, das zweite und das dritte Element (16, 18, 22) derart eingerichtet, insbesondere zueinander beabstandet, sind, dass ein B-Integral des Laserstrahls (12) von mindestens 1 Rad, insbesondere in einem Bereich von 1,5 Rad bis 5 Rad, erzeugt wird.

2. Laseranordnung (10) nach Anspruch 1, **dadurch gekennzeichnet, dass** die Laseranordnung (10) ein viertes Element (24) umfasst, wobei das vierte Element (24) als ein defokussierendes optisches Element ausgebildet ist, wobei das vierte Element (24) in die Propagationsrichtung (20) des Laserstrahls (12) vor dem dritten Element (22) angeordnet ist.

3. Laseranordnung (10) nach Anspruch 1 oder 2, **da-**

**durch gekennzeichnet, dass** das erste, das zweite, das dritte und/oder das vierte Element (16, 18, 22, 24) jeweils als ein Spiegel oder als eine Linse ausgebildet sind.

4. Laseranordnung (10) nach einem der voranstehenden Ansprüche, **dadurch gekennzeichnet, dass** die Laseranordnung (10) derart eingerichtet ist, dass ein Abstand zwischen dem ersten, dem zweiten, dem dritten und/oder dem vierten Element (16, 18, 22, 24) einstellbar ist.

5. Laseranordnung (10) nach einem der voranstehenden Ansprüche, **dadurch gekennzeichnet, dass** das erste, das zweite, das dritte und/oder das vierte Element (16, 18, 22, 24) als ein Zoom-Teleskop ausgebildet sind.

6. Laseranordnung (10) nach einem der voranstehenden Ansprüche, **dadurch gekennzeichnet, dass** das erste, das zweite, das dritte und/oder das vierte Element (16, 18, 22, 24) ein Kerrmedium umfassen oder daraus ausgebildet sind.

7. Laseranordnung (10) nach einem der voranstehenden Ansprüche, **dadurch gekennzeichnet, dass** das erste, das zweite, das dritte und/oder das vierte Element (16, 18, 22, 24) aus einem optisches Glas, insbesondere Quarzglas, BK7-Glas und/oder SF12-Glas, ausgebildet sind.

8. Laseranordnung (10) nach einem der voranstehenden Ansprüche, **dadurch gekennzeichnet, dass** die Laseranordnung (10) ein fünftes Element (26) umfasst, wobei das fünfte Element (26) als ein Kerrmedium ausgebildet ist, wobei das fünfte Element (26) in die Propagationsrichtung (20) des Laserstrahls (12) nach dem zweiten Element (18) angeordnet ist.

9. Laseranordnung (10) nach dem voranstehenden Anspruch, **dadurch gekennzeichnet, dass** das fünfte Element (26) als eine planparallele Platte oder als eine Linse ausgebildet ist.

10. Laseranordnung (10) nach einem der voranstehenden Ansprüche, **dadurch gekennzeichnet, dass** die Laseranordnung (10) eine Vorrichtung (28) zur zeitlichen Kompression des Laserstrahls (12) umfasst, wobei die Vorrichtung (28) in Propagationsrichtung (20) des Laserstrahls (12) nach dem dritten Element (22) angeordnet ist.

11. Laseranordnung (10) nach dem voranstehenden Anspruch, **dadurch gekennzeichnet, dass** die Vorrichtung (28) mindestens einen, insbesondere gechirpten, Spiegel, ein Prisma und/oder ein Gitter umfasst.

12. Laseranordnung (10) nach Anspruch 10 oder 11, **dadurch gekennzeichnet, dass** die Vorrichtung (28) als eine dispersive Spiegelanordnung ausgebildet ist.

13. Laseranordnung (10) nach einem der voranstehenden Ansprüche, **dadurch gekennzeichnet, dass** die Laseranordnung (10) eine Vakuumkammer (30) umfasst.

14. Laseranordnung (10) nach dem voranstehenden Anspruch, **dadurch gekennzeichnet, dass** das erste Element (16) und/oder das zweite Element (18) außerhalb der Vakuumkammer (30) angeordnet sind.

15. Laseranordnung (10) nach einem der voranstehenden Ansprüche und Anspruch 8 und 13, **dadurch gekennzeichnet, dass** die Vakuumkammer (30) ein Fenster umfasst, wobei das fünfte Element (26) als das Fenster der Vakuumkammer (30) ausgebildet ist.

16. Verfahren zur zeitlichen Kompression eines gepulsten Laserstrahls (12) mittels Selbstphasenmodulation umfassend die Schritte:

    - Bereitstellen einer Laseranordnung (10) nach einem der voranstehenden Ansprüche;
    - Einstellen eines Abstandes zwischen dem ersten, dem zweiten und/oder dem dritten Element (16, 18, 22) derart, dass ein B-Integral des Laserstrahls (12) von mindestens 1 Rad, insbesondere in einem Bereich von 1,5 Rad bis 5 Rad, erzeugt wird;
    - Zeitliche Kompression des Laserstrahls (12).

Fig.1

Europäisches Patentamt
European Patent Office
Office européen des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 127328 A1 (TRUMPF SCIENT LASERS GMBH CO KG [DE]) 7. Juni 2023 (2023-06-07) <br> * Absätze [0105] - [0123]; Abbildungen 1,3a,3d * <br> * Absätze [0031], [0051], [0081], [0082] * <br> ----- | 1-16 | INV. <br> H01S3/00 <br> G02F1/35 |
| X | MUSHEGHYAN MIKAYEL ET AL: "Towards a Sub-9 fs, 3 mJ, CEP-Stable Multipass Ti:Sapphire Amplifier", <br> 2019 CONFERENCE ON LASERS AND ELECTRO-OPTICS EUROPE & EUROPEAN QUANTUM ELECTRONICS CONFERENCE (CLEO/EUROPE-EQEC) IEEE, <br> 23. Juni 2019 (2019-06-23), Seiten 1-1, <br> XP033632882, <br> DOI: 10.1109/CLEOE-EQEC.2019.8872966 <br> [gefunden am 2019-10-16] <br> * Seite 1, Absätze 1,2; Abbildung 1 * <br> ----- | 1-7, 10-16 | |
| X | CARDIN VINCENT ET AL: "0.42?TW 2-cycle pulses at 1.8?[mu]m via hollow-core fiber compression", <br> APPLIED PHYSICS LETTERS AMERICAN INSTITUTE OF PHYSICS, 2 HUNTINGTON QUADRANGLE, MELVILLE, NY 11747, <br> Bd. 107, Nr. 18, <br> 2. November 2015 (2015-11-02), <br> XP012201770, <br> ISSN: 0003-6951, DOI: 10.1063/1.4934861 <br> [gefunden am 1901-01-01] <br> * Seite 3, linke Spalte, Absatz 3 - Seite 3, rechte Spalte, Absatz 2; Abbildungen 1,3 * <br> ----- <br> -/-- | 1-5,8-15 | **RECHERCHIERTE SACHGEBIETE (IPC)** <br><br> H01S <br> G02F |

Der vorliegende Recherchenbericht wurde für alle Patentansprüche erstellt

| Recherchenort | Abschlußdatum der Recherche | Prüfer |
|---|---|---|
| München | 18. Juni 2026 | Riechel, Stefan |

Seite 1 von 2

**Europäisches Patentamt**

**European Patent Office**

**Office européen des brevets**

# EUROPÄISCHER RECHERCHENBERICHT

**Nummer der Anmeldung**

EP 26 15 2555

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2023 125741 B3 (FRAUNHOFER GES FORSCHUNG [DE]) 12. September 2024 (2024-09-12) * Absätze [0018], [0040]; Abbildung 1 * * Absatz [0031] * ----- | 1-16 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 18. Juni 2026 | Riechel, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 ............................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 26 15 2555

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2026

| Im Recherchenbericht angeführtes Patentdokument | Datum der Veröffentlichung | Mitglied(er) der Patentfamilie | Datum der Veröffentlichung |
|---|---|---|---|
| DE 102021127328 A1 | 07-06-2023 | DE 102021127328 A1<br>WO 2023066995 A1 | 07-06-2023<br>27-04-2023 |
| DE 102023125741 B3 | 12-09-2024 | DE 102023125741 B3<br>WO 2025061321 A1 | 12-09-2024<br>27-03-2025 |

EPO FORM P0461

Für nähere Einzelheiten zu diesem Anhang : siehe Amtsblatt des Europäischen Patentamts, Nr.12/82